# EUROPÄISCHE PATENTSCHRIFT

(11) **EP 4 660 599 B1**
(45) Veröffentlichungstag und Bekanntmachung des Hinweises auf die Patenterteilung: **17.06.2026**
(21) Anmeldenummer: 24179904.8
(22) Anmeldetag: 04.06.2024
(51) Int. Cl.: G01L 1/22, G01L 5/00

(54) **KRAFTMESSMODUL UND VERFAHREN ZUM BETREIBEN EINES KRAFTMESSMODULS**
FORCE MEASURING MODULE AND METHOD FOR OPERATING A FORCE MEASURING MODULE
MODULE DE MESURE DE FORCE ET PROCÉDÉ DE FONCTIONNEMENT D'UN MODULE DE MESURE DE FORCE

(43) Veröffentlichungstag der Anmeldung: 10.12.2025
(73) Patentinhaber: ALLMATIC-Jakob Spannsysteme GmbH, 87647 Unterthingau (DE)
(72) Erfinder: Mayr, Herbert, 87477 Sulzberg (DE)
(74) Vertreter: Gulde & Partner

(56) Entgegenhaltungen:
- EP-A1- 4 137 792
- CN-U- 203 811 265
- US-A- 5 608 173
- US-A1- 2022 187 156

## Beschreibung

Die Erfindung betrifft ein Kraftmessmodul, zur Bestimmung einer zwischen zwei parallelen Flächen anliegenden Kraft, mit einem Gehäuse, mit mindestens einem in dem Gehäuse angeordneten Messelement zur Erfassung von dehnenden und/oder stauchenden Verformungen.

Daneben betrifft die Erfindung ein Verfahren zum Betreiben eines Kraftmessmoduls.

Spannantriebe, insbesondere für Schraubstöcke, sind im Stand der Technik in einer Vielzahl an Ausgestaltungen bekannt. In der Regel werden die Backenträger durch Drehung der Spindel relativ zueinander aufeinander zubewegt. Ein Backenträger ist dabei fixiert, wobei der andere Backenträger durch Betätigung der Antriebsspindel bewegt wird. An den Backenträgern sind standardmäßig Spannbacken befestigt, mit denen eine Fixierung eines Werkstücks realisiert werden kann. Die Spannbacken liegen nach Drehung der Antriebsspindel gegen ein einzuspannendes Werkstück an. Bei weiterer Drehung der Antriebsspindel baut sich zwischen den Spannteilen eine Spannkraft auf, die über die Spannbacken auf das Werkstück übertragen wird. Einem bestimmten, durch ein Drehwerkzeug an die Spindel des Spannantriebs angelegten Drehmoment entspricht eine bestimmte Spannkraft zwischen den Spannteilen. Je nach Geometrie der Spannbacken führt diese Spannkraft des Spannantriebs zu einer mehr oder weniger großen, auf das Werkstück einwirkenden Klemmkraft.

Es zeigen beispielsweise die EP 4 137 792 A1 ein Verwaltungssystem für einen Anbringungszustand eines Anbringungsobjekts.

Die US 2022/0187156 A1 offenbart ein Kraft- und Neigungsüberwachungssystem mit Positionierungserkennung.

Die US 5 608 173 A offenbart ein Kraftmessgerät mit elektrisch isolierten Auflageflächen.

Je nachdem, wie empfindlich das einzuspannende Werkstück ist, oder welche Arbeiten an dem Werkstück durchgeführt werden sollen, ist es wichtig, zu wissen, mit welcher Kraft das Werkstück eingespannt ist. Ein exaktes Einstellen der Kraft ist beispielsweise durch Anzug mittels Drehmomentschlüssels denkbar. Fraglich ist aber, wie hoch die durch das Drehmoment aufgebrachte Kraft an dem Werkstück tatsächlich ist. Darüber hinaus werden in produzierenden Betrieben häufig mehrere Spannantriebe verwendet. Eine gleichzeitige Überwachung aller Spannantriebe führt zu erhöhten Kosten.

Der Erfindung liegt daher die Aufgabe zugrunde, ein Kraftmessmodul sowie ein Verfahren zum Betreiben eines Kraftmessmoduls anzugeben, bei denen es ermöglicht wird, flexibel die momentan, beispielsweise durch einen Spannantrieb, aufgebrachte Kraft zu überwachen.

Diese Aufgabe ist bei der vorliegenden Erfindung durch die Merkmale des Kennzeichnungsteils des Patentanspruchs 1 zunächst dadurch gelöst, dass eine Auswerteeinheit vorgesehen ist, wobei durch die Auswerteeinheit Signale des Messelements empfangbar sind, wobei durch die Auswerteeinheit eine Information in Bezug auf eine anliegende Kraft zwischen den beiden parallelen Flächen in Abhängigkeit des Signals des Messelements bestimmbar ist.

Bei der Auswerteeinheit kann es sich um ein elektrisches Gerät handeln, das dazu ausgestaltet ist, Messsignale des Messelements zu erfassen und zu verarbeiten. Elektronische oder elektrische Geräte und/oder andere relevante Geräte oder Komponenten gemäß den hier beschriebenen Ausführungsformen der vorliegenden Erfindung können unter Verwendung jeder geeigneten Hardware, Firmware (z. B. einer anwendungsspezifischen integrierten Schaltung), Software oder einer Kombination aus Software, Firmware und Hardware implementiert werden. Beispielsweise können die verschiedenen Komponenten dieser Geräte auf einem integrierten Schaltkreis (IC) oder auf separaten IC-Chips untergebracht sein. Darüber hinaus können die verschiedenen Komponenten dieser Geräte auf einer flexiblen gedruckten Schaltungsfolie, einem Tape-Carrier-Package (TCP), einer Leiterplatte (PCB) oder auf einem einzigen Substrat implementiert sein. Darüber hinaus können die verschiedenen Komponenten dieser Vorrichtungen ein Prozess oder Thread sein, der auf einem oder mehreren Prozessoren in einem oder mehreren Computergeräten läuft, Computerprogrammanweisungen ausführt und mit anderen Systemkomponenten interagiert, um die verschiedenen hier beschriebenen Funktionen auszuführen. Die Computerprogrammanweisungen sind in einem Speicher gespeichert, der in einem Computergerät unter Verwendung eines Standardspeichers, wie z. B. eines Arbeitsspeichers (RAM), implementiert werden kann. Die Computerprogrammanweisungen können auch in anderen nicht-übertragbaren, computerlesbaren Medien gespeichert werden, wie z. B. auf einem Flash-Laufwerk oder ähnlichem. Eine fachkundige Person sollte auch erkennen, dass die Funktionalität verschiedener Computergeräte kombiniert oder in ein einziges Computergerät integriert werden kann, oder dass die Funktionalität eines bestimmten Computergeräts auf ein oder mehrere andere Computergeräte verteilt werden kann, ohne vom Anwendungsbereich der beispielhaften Ausführungsformen der vorliegenden Erfindung abzuweichen.

Die von dem Messelement ausgesendeten elektrischen Signale werden in Abhängigkeit einer Stauchung beziehungsweise Streckung oder Dehnung des Materials übermittelt. Auf diese Weise kann ein anliegender Druck, also eine anliegende Spannkraft, durch die Auswerteeinheit bestimmt werden.

Durch ein derartiges Kraftmessmodul, mit einem eigenen Gehäuse, kann die anliegende Klemmkraft an ein Werkstück beziehungsweise die durch einen Spannantrieb auf das Werkstück übertragene Kraft erfasst werden. Auf diese Weise können auch ältere Spannantriebe überprüft oder auch kalibriert werden.

Weitere bevorzugte Ausgestaltungen der Erfindung ergeben sich aus den übrigen, in den Unteransprüchen genannten Merkmalen.

Bei einer ersten Ausgestaltung des erfindungsgemäßen Kraftmessmoduls ist vorgesehen, dass das Messelement ringförmig ausgebildet ist und dass das Gehäuse eine ringförmige Durchführung aufweist, wobei das Messelement umlaufend um eine Bewandung der ringförmigen Durchführung angeordnet ist. Dabei kann das Messelement in einer zusätzlichen ringförmigen Vorrichtung angeordnet sein, die sich als Kraftring erstreckt. Auf diese Weise kann das Messelement platzsparend im Gehäuse positioniert werden.

Bei einer weiteren Ausgestaltung des erfindungsgemäßen Kraftmessmoduls ist vorgesehen, dass das Messelement an einem teilweise zylinderförmigen Durchführungselement angeordnet ist und dass das zylinderförmige Durchführungselement innerhalb der Durchführung angeordnet ist. Mittels der Durchführung können durch entsprechende Anordnung von Messhilfen durch die Durchführung auch Zugkräfte durch das Kraftmessmodul gemessen werden.

Zusätzlich oder alternativ ist bei einer weiteren Ausgestaltung der Erfindung vorgesehen, dass das Kraftmessmodul eine erste Fläche und eine zu der ersten Fläche parallele zweite Fläche aufweist und dass zur Bestimmung einer an dem Spannantrieb anliegenden Kraft eine erste Kraft an der ersten Fläche und eine zu der ersten Kraft entgegengesetzte zweite Kraft an der zweiten Fläche anliegt. Auf diese Weise kann das Kraftmessmodul Druckkräfte aufnehmen und entsprechend messen. Dies kann beispielsweise durch Einspannen des Kraftmessmoduls in einem Spannantrieb erfolgen. Auf diese Weise kann durch einfaches Einspannen eine Überprüfung der anliegenden Kraft in Bezug auf die Betätigung des Spannantriebes, beispielsweise mittels Drehmomentschlüssel oder einer Umdrehungszahl einer Schraube, erfolgen.

Erfindungsgemäß ist mindestens ein Befestigungselement zur Aufnahme von Zugkräften vorgesehen, wobei das Befestigungselement derart mit dem Messelement in Verbindung steht, dass eine Zugkraft an dem Befestigungselement zu einer Dehnung oder Stauchung des Messelements führt. Das Befestigungselement kann dabei in verschiedenen Ausgestaltungen vorgesehen sein. Denkbar ist, dass das Befestigungselement in Form eines Gewindes ausgebildet ist, sodass Komponenten an das Kraftmessmodul geschraubt werden können, wobei ein Zug an den Elementen eine Zugkraft auf das Kraftmessmodul überträgt. Denkbar ist aber auch, dass das Befestigungselement in Form eines Vorsprungs, beispielsweise in Form eines Bayonettverschlusses ausgebildet ist, sodass Elemente, auf die eine Zugkraft wirkt, auf einfache Weise formschlüssig mit der Kraftmessdose verbunden werden können. Wenn die Zugkräfte nicht zu stark sind, kann das Befestigungselement auch in Form einer Klebeverbindung ausgebildet sein, die zwischen der Kraftmessdose beziehungsweise dem Messelement und einem Element, auf das eine Zugkraft wirkt, besteht.

Bei einer weiteren vorteilhaften Ausgestaltung des erfindungsgemäßen Kraftmessmoduls ist vorgesehen, dass das Kraftmessmodul eine Anzeigeeinrichtung umfasst und dass die Informationen in Bezug auf eine anliegende Kraft durch die Anzeigeeinrichtung anzeigbar sind. Die Anzeigeeinrichtung kann dabei einen Anzeigebereich umfassen, der derart an dem Spannantrieb angeordnet ist, dass das Ablesen einer Kraft für den Nutzer möglich ist. Bei dem Anzeigebereich handelt es sich bevorzugt um ein Display. Denkbar ist aber auch, dass es sich um eine mechanische Nadel handelt, die sich proportional zur angelegten Kraft entlang einer definierten Skala bewegt.

Um einen flexiblen Einsatz des Kraftmessmoduls zu ermöglichen, ist bei einer weiteren Ausgestaltung der Erfindung eine Stromzufuhr mit einem Energiespeicher, vorzugsweise einem chemischen Energiespeicher, vorgesehen. Der Energiespeicher kann bevorzugt in Form eines wiederaufladbaren Akkumulators vorliegen. Dazu kann eine Ladekontaktbuchse am Spannantrieb vorgesehen sein, die elektrisch leitend mit dem wiederaufladbaren Akkumulator verbunden ist, sodass ein Wiederaufladen des Akkumulators erfolgen kann, wenn ein Ladekabel in die Ladekontaktbuchse eingeführt wird. Auf diese Weise kann der Spannantrieb flexibel positioniert werden und muss nicht dauerhaft an einer Stromversorgung angeschlossen sein. Denkbar ist auch, dass der Energiespeicher auswechselbar ist, sodass auf einen Ladezyklus im Spannantrieb verzichtet werden kann. Denkbar ist auch, dass eine induktive Lademöglichkeit vorgesehen ist, um den Energiespeicher des Kraftmessmoduls drahtlos aufzuladen.

Ferner ist bei einer weiteren Ausgestaltung des erfindungsgemäßen Kraftmoduls vorgesehen, dass die Auswerteeinheit ein Sendermodul umfasst, dass das Sendermodul eine drahtlose Kommunikationsschnittstelle umfasst und dass mindestens die Information über die anliegende Kraft mittels der drahtlosen Kommunikationsschnittstelle versendbar ist. Bei der drahtlosen Kommunikationsschnittstelle kann es sich bevorzugt um eine WLAN-Verbindung beziehungsweise einer Bluetooth Verbindung handeln. Mittels der Kommunikationsschnittstelle können Messsignale die durch das Kraftmessmodul aufgenommen wurden, an einen kompatiblen Empfänger übermittelt werden. Auf diese Weise können Informationen über die anliegende Kraft an einem Werkstück beziehungsweise über den Verlauf der anliegenden Kraft über eine definierte Zeitspanne an dem Werkstück beispielsweise an eine zentrale Stelle übermittelt werden. In einer Fertigung werden häufig mehrere Spannantriebe genutzt. Durch die Übermittlung der Daten an eine zentrale Stelle kann ein Nutzer verschiedene Spannantriebe gleichzeitig überwachen und gegebenenfalls eingreifen, sollten die übermittelten Daten darauf hindeuten, dass ein Fehler vorliegt.

Für eine kompakte Bauweise ist bei einer weiteren Ausgestaltung des erfindungsgemäßen Kraftmessmoduls vorgesehen, dass das Gehäuse einen etwa trapezförmigen Querschnitt aufweist. Durch eine derartige Ausgestaltung können kleinere Elemente des Kraftmessmoduls in einem Teil volumenmäßig kleineren Teil des Gehäuses angeordnet werden, wohingegen Elemente des Kraftmessmoduls mit größerem Platzbedarf in einem volumenmäßig größeren Teil des Gehäuses angeordnet werden können. Insgesamt ist der Platzbedarf somit optimal ausgenutzt, wobei die tatsächlichen Abmessungen des Gehäuses geringer ausfallen, als bei einem vergleichbaren quaderförmigen oder würfelförmigen Gehäuse.

Dabei kann zusätzlich bei einer weiteren Ausgestaltung der Erfindung vorgesehen sein, dass die Auswerteeinheit innerhalb des Gehäuses im Bereich der flächenmäßig größeren Grundfläche des Trapezes angeordnet ist, wobei das Messelement innerhalb des Gehäuses im Bereich der flächenmäßig kleineren Grundfläche des Trapezes angeordnet ist. Auf diese Weise kann eine Platine der Auswerteeinheit und eine mögliche Anzeigeeinrichtung komfortabel verortet werden, wobei das Messelement weniger Platz benötigt und somit im Bereich der flächenmäßig kleineren Grundfläche des Trapezes angeordnet werden kann.

Die erfindungsgemäße Aufgabe wird außerdem gelöst von einem Verfahren zum Betreiben eines Kraftmessmoduls, wobei durch die Auswerteeinheit eine Signalisierung erfolgt, wenn ein Kraftabfall oder ein Kraftanstieg einer anliegenden Kraft detektiert wird, der über beziehungsweise unter einem vorgegebenen Grenzwert liegt. Dabei ist vorgesehen, dass das Kraftmessmodul erfindungsgemäß ausgestaltet ist. Die vorherigen Ausführungen betreffend das erfindungsgemäße Kraftmessmodul gelten entsprechend auch für das erfindungsgemäße Verfahren.

Je nach eingespanntem Werkstück in einem Spannantrieb ist es wichtig, dass die Kraft, mit der das Werkstück eingespannt wird, nicht zu hoch ist, um das Werkstück nicht zu beschädigen. Darüber hinaus kann bei einer zu hohen Kraft auch eine Beschädigung des Spannantriebs erfolgen. Auf der anderen Seite darf die Kraft nicht zu gering sein, damit das Werkstück sicher durch den Spannantrieb gehalten wird. Außerdem kann eine zu geringe Kraft auf einen Defekt des Spannantriebs hinweisen. Sollte die Kraft im Bearbeitungszeitraum ansteigen oder abnehmen, kann dies ein Zeichen für eine Beschädigung des Werkstücks oder einen fehlerhaften Einspannvorgang sein. Eine daraus resultierende Signalisierung kann sowohl akustisch als auch visuell erfolgen. Es kann vorgesehen sein, dass Mittel zur Signalisierung an dem Spannantrieb vorgesehen sind, beispielsweise eine Signalleuchte und/oder ein Lautsprecher. Denkbar ist aber auch, dass die Signalisierung über die drahtlose Kommunikationsschnittstelle erfolgt. Eine Signalisierung erfolgt dann beispielsweise auf einem Endgerät, das der Nutzer des Spannantriebs überwacht.

Bei einer ersten Ausgestaltung des erfindungsgemäßen Verfahrens ist vorgesehen, dass ein Alarm ausgegeben wird, wenn ein sprunghafter Kraftabfall oder Kraftanstieg detektiert wird. Bei einem sprunghaften Anstieg beziehungsweise Abfall der Kraft ist mit hoher Wahrscheinlichkeit eine Beschädigung beziehungsweise ein Fehler während des Spannens oder der Bearbeitung des Werkstücks aufgetreten. Bei einer derartigen Detektion wird daher eine Warnung ausgegeben, die dem Nutzer des Spannantriebs eine Möglichkeit gibt, schnell zu reagieren, um weiteren Schaden zu verhindern.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine perspektivische Darstellung eines Ausführungsbeispiels eines Kraftmessmoduls mit einem Gehäuse,
- Figur 2: eine Schnittdarstellung des Kraftmessmoduls gemäß Figur 1,
- Figur 3: eine Darstellung einzelner Komponenten eines Kraftmessmoduls für einen Spannantrieb und
- Figur 4: eine Blockdarstellung eines Verfahrens zum Betreiben eines Kraftmessmoduls.

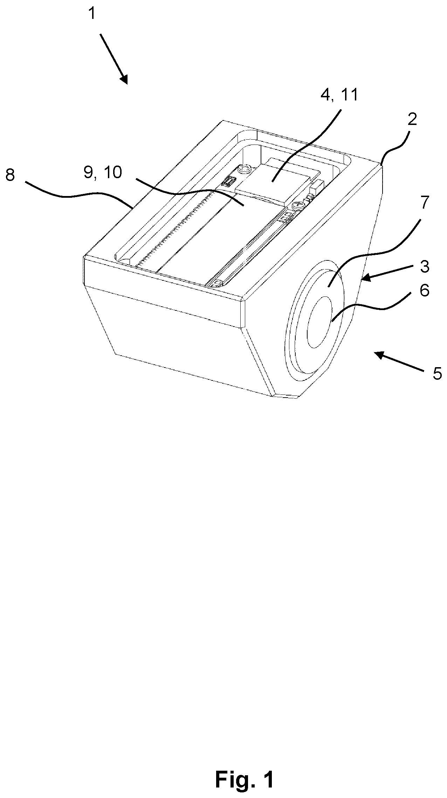

Figur 1 zeigt ein Kraftmessmodul 1, zur Bestimmung einer an einem Spannantrieb anliegenden Kraft, mit einem Gehäuse 2, mit mindestens einem in dem Gehäuse angeordneten Messelement 3 zur Erfassung von dehnenden und/oder stauchenden Verformungen. Dabei ist eine Auswerteeinheit 4 vorgesehen, wobei durch die Auswerteeinheit 4 Signale des Messelements 3 empfangbar sind, wobei durch die Auswerteeinheit 4 eine Information in Bezug auf eine anliegende Kraft an dem Spannantrieb in Abhängigkeit des Signals des Messelements 3 bestimmbar ist.

Das Kraftmessmodul 1 kann beispielsweise zwischen zwei hier nicht dargestellten Spannbacken eines Spannantriebs angeordnet werden, um die durch den Spannantrieb aufgebrachte Kraft zu messen. Durch Implementierung eines derartigen Kraftmessmoduls 1 eine später an einem Werkstück anliegende Klemmkraft erfasst werden. Somit können Zusammenhänge der durchgeführten Umdrehungen einer Spindel, oder eines durch einen Drehmomentschlüssel aufgebrachten Drehmoments, und der daraus resultierenden Klemmkraft bestimmt werden. Vor allem kann dadurch beim Einspannen eines Werkstücks eine exakte Kraft eingestellt werden, sodass Beschädigungen des Werkstücks vermieden werden können.

Das Messelement 3 ist ringförmig ausgebildet. Das Gehäuse 2 weist eine ringförmige Durchführung 5 auf, wobei das Messelement 3 umlaufend um eine Bewandung der ringförmigen Durchführung 5 angeordnet ist. Dabei ist das Messelement 3 an einem teilweise zylinderförmigen Durchführungselement 6 angeordnet. Das zylinderförmige Durchführungselement 6 ist innerhalb der Durchführung 5 angeordnet. Mittels der Durchführung 5 können durch entsprechende Anordnung von Messhilfen durch die Durchführung 5 auch Zugkräfte durch das Kraftmessmodul 1 gemessen werden.

Das Kraftmessmodul 1 weist ferner eine erste Fläche 7 und eine zu der ersten Fläche 7 parallele zweite Fläche 8 auf. Zur Bestimmung einer Kraft, die beispielsweise an einem Spannantrieb anliegt, wird das Kraftmessmodul 1 zwischen den Spannbacken des Spannantriebs eingespannt. An der ersten Fläche 7 liegt dann eine erste Kraft an, wobei eine zu der ersten Kraft entgegengesetzte zweite Kraft an der zweiten Fläche 8 anliegt. Auf diese Weise kann das Kraftmessmodul 1 Druckkräfte aufnehmen und entsprechend messen. Auf diese Weise kann durch einfaches Einspannen eine Überprüfung der anliegenden Kraft in Bezug auf die Betätigung des Spannantriebes, beispielsweise mittels Drehmomentschlüssel oder einer Umdrehungszahl einer Schraube, erfolgen.

Das Gehäuse 2 weist einen etwa trapezförmigen Querschnitt auf. Durch eine derartige kompakte Ausgestaltung können kleinere Elemente des Kraftmessmoduls 1 in einem Teil volumenmäßig kleineren Teil des Gehäuses 2 angeordnet werden, wohingegen Elemente des Kraftmessmoduls 1 mit größerem Platzbedarf in einem volumenmäßig größeren Teil des Gehäuses 2 angeordnet werden können. Insgesamt ist der Platzbedarf somit optimal ausgenutzt, wobei die tatsächlichen Abmessungen des Gehäuses 2 geringer ausfallen, als bei einem vergleichbaren quaderförmigen oder würfelförmigen Gehäuse 2.

Entsprechend ist in diesem Ausführungsbeispiel die Auswerteeinheit 4 innerhalb des Gehäuses 2 im Bereich der flächenmäßig größeren Grundfläche des Trapezes angeordnet, wobei das Messelement 3 innerhalb des Gehäuses 2 im Bereich der flächenmäßig kleineren Grundfläche des Trapezes angeordnet ist. Auf diese Weise kann eine Platine der Auswerteeinheit 4 und eine Anzeigeeinrichtung 9 komfortabel verortet werden, wobei das Messelement 3 weniger Platz benötigt und somit im Bereich der flächenmäßig kleineren Grundfläche des Trapezes angeordnet werden kann.

Die Anzeigeeinrichtung 9, weist einen Anzeigebereich 10 in Form eines Displays auf. In dem Anzeigebereich 10 werden Informationen in Bezug auf eine anliegende Kraft dargestellt. Dies erfolgt im vorliegenden Ausführungsbeispiel durch Anzeigen von konkreten Kraftwerten, die durch die Auswerteeinheit 4 an die Anzeigeeinrichtung 9 übertragen werden. Über die Anzeigeeinrichtung 9 kann ein Nutzer Einstellungen vornehmen, die ihm auch andere Darstellungen erlauben. Insbesondere ist denkbar, dass durch die Auswerteeinheit 4 Umrechnungen durchgeführt werden, durch die die anliegende Kraft in anderen Einheiten dargestellt werden kann.

Das Kraftmessmodul 1 verfügt ferner über eine drahtlose Kommunikationsschnittstelle 11. Die drahtlose Kommunikationsschnittstelle 11 ist im vorliegenden Ausführungsbeispiel als Bluetooth Schnittstelle ausgeführt. Mittels der drahtlosen Kommunikationsschnittstelle 11 können Informationen über eine anliegende Kraft an kompatible Empfänger versendet werden. Dabei kann es sich um Endgeräte handeln, die von einem Nutzer überwacht werden. Somit ist es möglich, Informationen über die anliegende Kraft an eine zentrale Stelle zu übermitteln, die durch einen Nutzer einfacher überwacht werden kann.

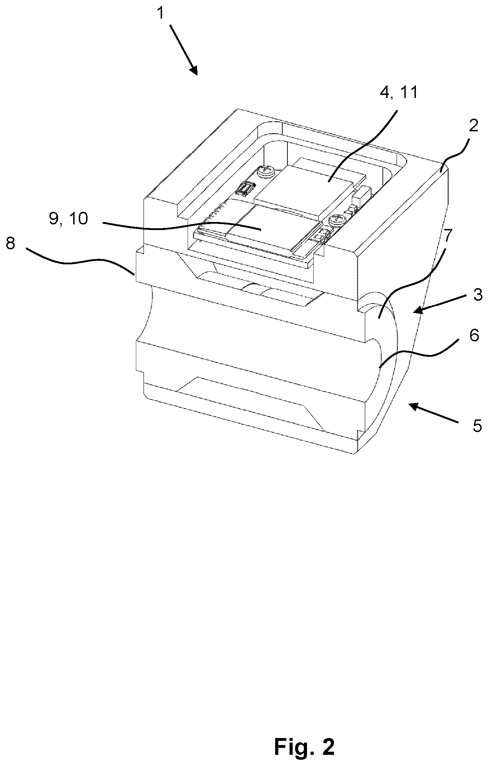

Figur 2 zeigt eine Schnittdarstellung des Kraftmessmoduls 1 gemäß Figur 1. Dabei ist das Durchführungselement 6 beziehungsweise die Durchführung 5 erkennbar.

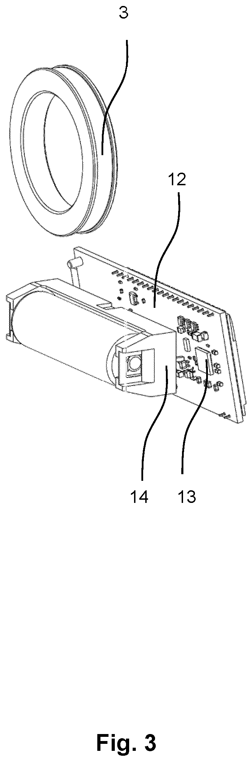

Figur 3 zeigt verschiedene Komponenten des Kraftmessmoduls 1 ohne das Gehäuse 2. Dabei ist dargestellt, dass das Messelement 3 in einer ringförmigen Vorrichtung angeordnet ist, die sich als Kraftring erstreckt. Auf diese Weise kann das Messelement 3 platzsparend im Gehäuse 2 positioniert werden. Die Auswerteeinheit 4 liegt in Form einer Platine 12 mit mindestens einem Mikrochip 13 vor.

Um das Kraftmessmoduls 1 mit Strom zu versorgen, ist das Kraftmessmodul mit einer Stromzufuhr in Form eines chemischen Energiespeichers 14 verbunden. Der chemische Energiespeicher 14 ist dabei auswechselbar in einem Gehäuse 2 des Kraftmessmoduls 1 angeordnet. Zum Auswechseln des Energiespeichers 14 ist eine hier nicht dargestellte Abdeckung an dem Gehäuse 2 vorgesehen, die durch den Nutzer entfernt und nach Auswechseln des Energiespeichers 14 wieder aufgesetzt werden kann.

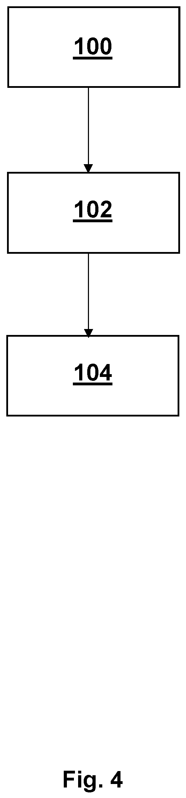

Figur 4 zeigt eine Blockdarstellung eines Ausführungsbeispiels eines Verfahrens zum Betreiben eines Kraftmessmoduls 1. Durch das Kraftmessmodul 1 sind verschiedene Szenarien denkbar, die den Einsatz eines derartigen Spannantriebs 1 in einer Fertigung vereinfachen. In Schritt 100 wird zunächst das Kraftmessmodul 1 manuell oder automatisch zwischen den Spannbacken eines Spannantriebs geklemmt. Das Kraftmessmodul 1 ermittelt dabei die anliegende Kraft.

Wenn durch die Auswerteeinheit 4 ein Kraftabfall oder ein Kraftanstieg einer anliegenden Kraft detektiert wird, der über beziehungsweise unter einem vorgegebenen Grenzwert liegt, erfolgt in Schritt 102 eine Signalisierung der Detektion. Dies kann mittels Lautsprechern oder Lampen direkt am Gehäuse 2 des Kraftmessmoduls erfolgen, oder durch drahtlose Übermittlung an ein Endgerät, durch das dann eine Signalisierung erfolgt. Ein derartiger Kraftabfall kann ein Anzeichen für eine Beschädigung des Spannantriebs sein, beispielsweise eine Beschädigung der Antriebsspindel.

In Schritt 104 wird ein Alarm ausgegeben, wenn ein sprunghafter Kraftabfall oder Kraftanstieg durch das Kraftmessmodul 1 detektiert wird. Bei einem sprunghaften Anstieg beziehungsweise Abfall der Kraft ist mit hoher Wahrscheinlichkeit eine Beschädigung beziehungsweise ein Fehler während des Spannens aufgetreten. Bei einer derartigen Detektion wird daher eine Warnung ausgegeben, die dem Nutzer des Spannantriebs eine Möglichkeit gibt, schnell zu reagieren, um weiteren Schaden zu verhindern.

### Bezugszeichenliste

- 1: Kraftmessmodul
- 2: Gehäuse
- 3: Messelement
- 4: Auswerteeinheit
- 5: Durchführung
- 6: Durchführungselement
- 7: Erste Fläche
- 8: Zweite Fläche
- 9: Anzeigeeinrichtung
- 10: Anzeigebereich
- 11: Kommunikationsschnittstelle
- 12: Platine
- 13: Mikrochip
- 14: Energiespeicher

## Patentansprüche

1. Kraftmessmodul (1), zur Bestimmung einer zwischen zwei parallelen Flächen anliegenden Kraft, mit einem Gehäuse (2), mit mindestens einem in dem Gehäuse (2) angeordneten Messelement (3) zur Erfassung von dehnenden und/oder stauchenden Verformungen, mit einer Auswerteeinheit (4), wobei durch die Auswerteeinheit (4) Signale des Messelements (3) empfangbar sind, wobei durch die Auswerteeinheit (4) eine Information in Bezug auf eine anliegende Kraft zwischen den zwei parallelen Flächen in Abhängigkeit des Signals des Messelements (3) bestimmbar ist, und **dadurch gekennzeichnet, dass** mindestens ein Befestigungselement zur Aufnahme von Zugkräften vorgesehen ist, wobei das Befestigungselement derart mit dem Messelement (3) in Verbindung steht, dass eine Zugkraft an dem Befestigungselement zu einer Dehnung oder Stauchung des Messelements (3) führt.

2. Kraftmessmodul (1) nach Anspruch 1, **dadurch gekennzeichnet, dass** das Messelement (3) ringförmig ausgebildet ist und dass das Gehäuse (2) eine ringförmige Durchführung (5) aufweist, wobei das Messelement (3) umlaufend um eine Bewandung der ringförmigen Durchführung (5) angeordnet ist.

3. Kraftmessmodul (1) nach Anspruch 2, **dadurch gekennzeichnet, dass** das Messelement (3) an einem teilweise zylinderförmigen Durchführungselement (6) angeordnet ist und dass das zylinderförmige Durchführungselement (6) innerhalb der Durchführung (5) angeordnet ist.

4. Kraftmessmodul (1) nach einem der Ansprüche 1 bis 3, **dadurch gekennzeichnet, dass** das Kraftmessmodul (1) eine erste Fläche (7) und eine zu der ersten Fläche (7) parallele zweite Fläche (8) aufweist und dass zur Bestimmung einer zwischen zwei parallelen Flächen anliegenden Kraft eine erste Kraft an der ersten Fläche (7) und eine zu der ersten Kraft entgegengesetzte zweite Kraft an der zweiten Fläche (8) anliegt.

5. Kraftmessmodul (1) nach einem der Ansprüche 1 bis 4, **dadurch gekennzeichnet, dass** das Kraftmessmodul (1) eine Anzeigeeinrichtung (9) umfasst und dass die Informationen in Bezug auf eine anliegende Kraft durch die Anzeigeeinrichtung (9) anzeigbar sind.

6. Kraftmessmodul (1) nach einem der Ansprüche 1 bis 5, **dadurch gekennzeichnet, dass** eine Stromzufuhr mit einem Energiespeicher (14), vorzugsweise einem chemischen Energiespeicher, vorgesehen ist.

7. Kraftmessmodul (1) nach einem der Ansprüche 1 bis 6, **dadurch gekennzeichnet, dass** die Auswerteeinheit (4) ein Sendermodul umfasst, dass das Sendermodul eine drahtlose Kommunikationsschnittstelle (11) umfasst und dass mindestens die Information über die anliegende Kraft mittels der drahtlosen Kommunikationsschnittstelle (11) versendbar ist.

8. Kraftmessmodul (1) nach einem der Ansprüche 1 bis 7, **dadurch gekennzeichnet, dass** das Gehäuse (2) einen etwa trapezförmigen Querschnitt aufweist.

9. Kraftmessmodul (1) nach Anspruch 8, **dadurch gekennzeichnet, dass** die Auswerteeinheit (4) innerhalb des Gehäuses (2) im Bereich der flächenmäßig größeren Grundfläche des Trapezes angeordnet ist, wobei das Messelement (3) innerhalb des Gehäuses (2) im Bereich der flächenmäßig kleineren Grundfläche des Trapezes angeordnet ist.

10. Verfahren zum Betreiben eines Kraftmessmoduls (1) nach einem der Ansprüche 1 bis 9, **dadurch gekennzeichnet, dass** durch die Auswerteeinheit (4) eine Signalisierung erfolgt, wenn ein Kraftabfall oder ein Kraftanstieg einer anliegenden Kraft detektiert wird, der über beziehungsweise unter einem vorgegebenen Grenzwert liegt.

11. Verfahren nach Anspruch 10, **dadurch gekennzeichnet, dass** ein Alarm ausgegeben wird, wenn ein sprunghafter Kraftabfall oder Kraftanstieg detektiert wird.

## Claims

1. A force measuring module (1) for determining a force applied between two parallel surfaces, comprising a housing (2), comprising at least one measurement element (3) arranged in the housing (2) for detecting elongating and/or compressing deformations, comprising an evaluation unit (4), signals from the measurement element (3) being able to be received by the evaluation unit (4), information relating to a force applied between the two parallel surfaces being able to be determined by the evaluation unit (4) on the basis of the signal from the measurement element (3), and **characterized in that** at least one fastening element is provided for absorbing tensile forces, the fastening element being connected to the measurement element (3) such that a tensile force on the fastening element results in elongation or compression of the measurement element (3).

2. The force measuring module (1) according to Claim 1, **characterized in that** the measurement element (3) is formed annularly and **in that** the housing (2) has an annular bushing (5), the measurement element (3) being arranged circumferentially around a wall of the annular bushing (5).

3. The force measuring module (1) according to Claim 2, **characterized in that** the measurement element (3) is arranged on a partially cylindrical bushing element (6) and **in that** the cylindrical bushing element (6) is arranged within the bushing (5).

4. The force measuring module (1) according to any of Claims 1 to 3, **characterized in that** the force measuring module (1) has a first surface (7) and a second surface (8) parallel to the first surface (7) and **in that**, to determine a force applied between two parallel surfaces, a first force is applied to the first surface (7) and a second force opposing the first force is applied to the second surface (8).

5. The force measuring module (1) according to any of Claims 1 to 4, **characterized in that** the force measuring module (1) comprises a display device (9) and **in that** the information relating to an applied force can be displayed by the display device (9).

6. The force measuring module (1) according to any of Claims 1 to 5, **characterized in that** a current supply comprising an energy storage unit (14), preferably a chemical energy storage unit, is provided.

7. The force measuring module (1) according to any of Claims 1 to 6, **characterized in that** the evaluation unit (4) comprises a transmitter module, **in that** the transmitter module comprises a wireless communication interface (11) and **in that** at least the information relating to the applied force can be sent by means of the wireless communication interface (11).

8. The force measuring module (1) according to any of Claims 1 to 7, **characterized in that** the housing (2) has an approximately trapezoidal cross section.

9. The force measuring module (1) according to Claim 8, **characterized in that** the evaluation unit (4) is arranged within the housing (2) in the region of the larger-area base of the trapezium, the measurement element (3) being arranged within the housing (2) in the region of the smaller-area base of the trapezium.

10. A method for operating a force measuring module (1) according to any of Claims 1 to 9, **characterized in that** signaling is carried out by the evaluation unit (4) if a decrease or increase in an applied force is detected which is above or below a predetermined limit value, respectively.

11. The method according to claim 10, **characterized in that** an alarm is triggered if a sudden decrease or increase in force is detected.

## Revendications

1. Module de mesure de force (1) destiné à déterminer une force appliquée entre deux surfaces parallèles, avec un boîtier (2), avec au moins un élément de mesure (3) disposé dans le boîtier (2) pour détecter des déformations de dilatation et/ou de tassement, avec une unité d'évaluation (4), dans lequel l'unité d'évaluation (4) permet de recevoir des signaux de l'élément de mesure (3), dans lequel l'unité d'évaluation (4) permet de déterminer des informations relatives à une force appliquée entre les deux surfaces parallèles en fonction du signal de l'élément de mesure (3) et **caractérisé en ce qu'**au moins un élément de fixation destiné à recevoir des forces de traction est prévu, dans lequel l'élément de fixation est en liaison avec l'élément de mesure (3) de telle sorte qu'une force de traction sur l'élément de fixation conduit à une dilatation ou un tassement de l'élément de mesure (3).

2. Module de mesure de force (1) selon la revendication 1, **caractérisé en ce que** l'élément de mesure (3) est réalisé sous une forme annulaire et **en ce que** le le boîtier (2) présente une traversée annulaire (5), dans lequel l'élément de mesure (3) est disposé circonférentiellement autour d'une paroi de la traversée annulaire (5).

3. Module de mesure de force (1) selon la revendication 2, **caractérisé en ce que** l'élément de mesure (3) est disposé sur un élément de traversée partiellement cylindrique (6) et **en ce que** l'élément de traversée partiellement cylindrique (6) est disposé à l'intérieur de la traversée (5).

4. Module de mesure de force (1) selon l'une des revendications 1 à 3, **caractérisé en ce que** le module de mesure de force (1) présente une première surface (7) et une seconde surface (8) parallèle à la première surface (7) et **en ce que**, pour déterminer une force appliquée entre deux surfaces parallèles, une première force est appliquée à la première surface (7) et une seconde force opposée à la première force est appliquée à la seconde surface (8).

5. Module de mesure de force (1) selon l'une des revendications 1 à 4, **caractérisé en ce que** le module de mesure de force (1) comprend un moyen d'affichage (9) et **en ce que** les informations relatives à une force appliquée peuvent être affichées par le moyen d'affichage (9).

6. Module de mesure de force (1) selon l'une des revendications 1 à 5, **caractérisé en ce qu'**une alimentation en courant est prévue avec un élément de stockage d'énergie (14), de préférence un dispositif de stockage d'énergie chimique.

7. Module de mesure de force (1) selon l'une des revendications 1 à 6, **caractérisé en ce que** l'unité d'évaluation (4) comprend un module d'émetteur, **en ce que** le module d'émetteur comprend une interface de communication sans fil (11) et **en ce qu'**au moins les informations sur la force appliquée peuvent être transmises à l'aide de l'interface de communication sans fil (11).

8. Module de mesure de force (1) selon l'une des revendications 1 à 7, **caractérisé en ce que** le boîtier (2) présente une section transversale approximativement trapézoïdale.

9. Module de mesure de force (1) selon la revendication 8, **caractérisé en ce que** l'unité d'évaluation (4) est disposée à l'intérieur du boîtier (2) au niveau de la plus grande surface de base du trapèze, l'élément de mesure (3) étant disposé à l'intérieur du boîtier (2) au niveau de la plus petite surface de base du trapèze.

10. Procédé destiné à faire fonctionner un module de mesure de force (1) selon l'une des revendications 1 à 9, **caractérisé en ce que** l'unité d'évaluation (4) permet de réaliser une signalisation lorsqu'une diminution de force ou une augmentation de force d'une force appliquée est détectée, laquelle se trouve au-dessus respectivement au-dessous valeur seuil prédéterminée.

11. Procédé selon la revendication 10, **caractérisé en ce qu'**une alarme est émise lorsqu'une diminution de force ou augmentation de force soudaine est détectée.
